# EUROPEAN PATENT APPLICATION

(11) **EP 4 492 712 A1**
(43) Date of publication of application: **15.01.2025**
(21) Application number: 22935566.4
(22) Date of filing: 01.04.2022
(51) Int. Cl.: H04L 1/00, H04J 3/07

(54) **ERROR CORRECTION ENCODING DEVICE, ERROR CORRECTION DECODING DEVICE, ERROR CORRECTION ENCODING METHOD, ERROR CORRECTION DECODING METHOD, CONTROL CIRCUIT, AND STORAGE MEDIUM**

(71) Applicant: MITSUBISHI ELECTRIC CORPORATION, Chiyoda-ku Tokyo 100-8310 (JP)
(72) Inventor: ISHII, Kenji, Tokyo 100-8310 (JP)
(74) Representative: Plasseraud IP
(86) International application number: PCT/JP2022/016999
(87) International publication number: WO 2023/188431

(57) **Abstract**

An error correction encoding device (1) includes a mapping circuit (11) that multiplexes a client signal and maps the multiplexed client signal into a transmission frame, and maps stuff bits for adjusting a data transmission rate into the transmission frame, a control data error correction encoding circuit (13) that performs first error correction encoding on control data included in the transmission frame and indicating the positions and values of the stuff bits, and an error correction encoding circuit (12) that performs second error correction encoding on the transmission frame including the control data on which the first error correction encoding is performed by the control data error correction encoding circuit.

## Description

### Field

The present disclosure relates to an error correction encoding device, an error correction decoding device, an error correction encoding method, an error correction decoding method, a control circuit, and a storage medium.

### Background

In conventional optical transmission devices for core and metro networks, a multiplexing scheme is applied to multiplex low-rate signals to generate a high-rate signal in order to improve network efficiency. A high-rate signal generated in this scheme has a transmission rate exceeding 100 Gbps in recent optical transmission devices. To improve reliability and achieve long-distance transmission of optical signals of more than 100 Gbps, an error correcting code is typically added. For example, Non Patent Literature 1 has standardized mapping specifications for accommodating low-rate client signals in an optical transport unit (OTU) frame used in optical transmission devices for core and metro networks. Non Patent Literature 1 defines an OTU4 frame as a transmission frame for up to 100 Gbps, and defines an OTUCn as a frame that arbitrarily constitutes a transmission capacity exceeding 100 Gbps in units of 100 Gbps. For the OTU4 frame, Reed-Solomon (RS) (255, 239) is defined as forward error correction (FEC). On the other hand, for the OTUCn frame, any specific scheme of error correction is not defined. However, in the flexible optical transport network (OTN) (FlexO) that uses the OTUCn frame as client signals, RS10 (544, 514) is defined.

### Citation List

### Non Patent Literature

Non Patent Literature 1: ITU-T G.709/Y1331

### Summary of Invention

### Problem to be solved by the Invention

As described above, an error correcting code is defined for a conventional multiplexed transmission frame. To achieve higher-capacity and longer-distance transmission, the error correcting code and a decoding device are required to achieve higher correction performance.

The present disclosure has been made in view of the above, and an object of the present disclosure is to provide an error correction encoding device that achieves an improvement in error correction performance.

### Means to Solve the Problem

To solve the above problem and achieve an object, an error correction encoding device according to the present disclosure includes: a mapping circuit to multiplex a client signal and map the multiplexed client signal into a transmission frame, and map stuff bits for adjusting a data transmission rate into the transmission frame. Furthermore, the error correction encoding device includes a first error correction encoding circuit to perform first error correction encoding on control data included in the transmission frame and indicating positions and values of the stuff bits; and a second error correction encoding circuit to perform second error correction encoding on the transmission frame including the control data on which the first error correction encoding is performed by the first error correction encoding circuit.

### Effects of the Invention

The error correction encoding device according to the present disclosure has the effect of being able to achieve an improvement in error correction performance.

### Brief Description of Drawings

FIG. 1 is a diagram illustrating a configuration example of an error correction encoding device according to a first embodiment.
FIG. 2 is a diagram illustrating a configuration example of an error correction decoding device according to the first embodiment.
FIG. 3 is a diagram illustrating a configuration example of a transmission frame generated by the error correction encoding device according to the first embodiment.
FIG. 4 is a flowchart illustrating an example of the operation of the error correction encoding device according to the first embodiment.
FIG. 5 is a flowchart illustrating an example of the operation of the error correction decoding device according to the first embodiment.
FIG. 6 is a diagram illustrating a configuration example of an error correction encoding device according to a second embodiment.
FIG. 7 is a diagram illustrating a configuration example of an error correction decoding device according to the second embodiment.
FIG. 8 is a diagram illustrating a configuration example of transmission frames generated by the error correction encoding device according to the second embodiment.
FIG. 9 is a flowchart illustrating an example of the operation of the error correction encoding device according to the second embodiment.
FIG. 10 is a flowchart illustrating an example of the operation of the error correction decoding device according to the second embodiment.
FIG. 11 is a diagram illustrating an example of hardware that implements the error correction encoding device.
FIG. 12 is a diagram illustrating another example of hardware that implements the error correction encoding device.

### Description of Embodiments

Hereinafter, an error correction encoding device, an error correction decoding device, an error correction encoding method, an error correction decoding method, a control circuit, and a storage medium according to embodiments of the present disclosure will be described in detail with reference to the drawings.

### First Embodiment.

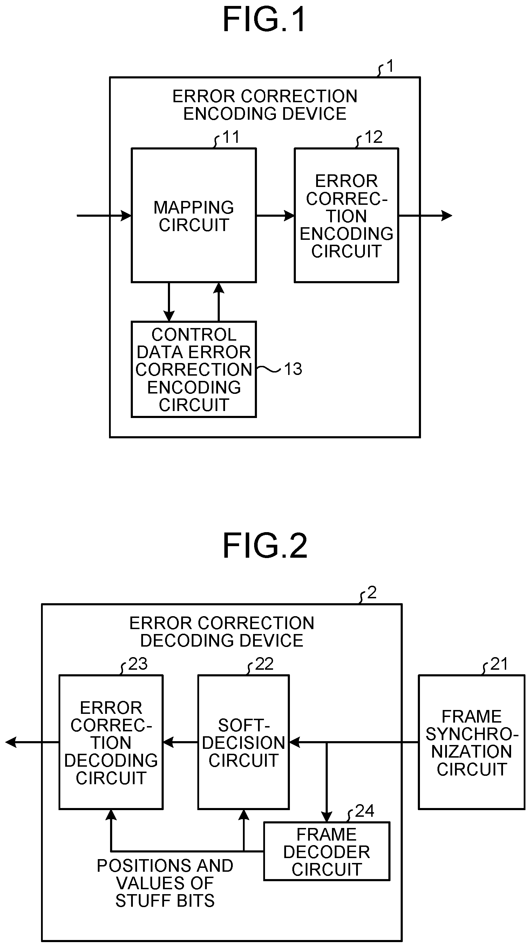

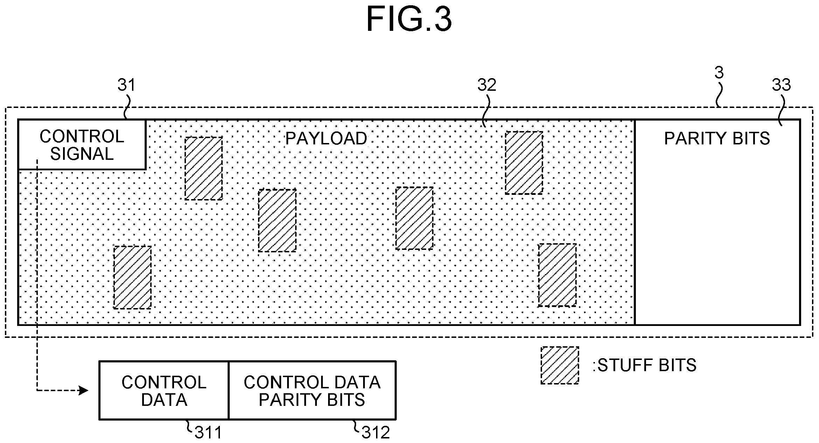

FIG. 1 is a diagram illustrating a configuration example of an error correction encoding device 1 according to a first embodiment. FIG. 2 is a diagram illustrating a configuration example of an error correction decoding device 2 according to the first embodiment. FIG. 3 is a diagram illustrating a configuration example of a transmission frame generated by the error correction encoding device 1 according to the first embodiment. The error correction encoding device 1 illustrated in FIG. 1 is a component, for example, of a transmitting apparatus that transmits a client signal in a communication system. The error correction decoding device 2 illustrated in FIG. 2 is a component, for example, of a receiving apparatus that receives the client signal in the communication system.

As illustrated in FIG. 1, the error correction encoding device 1 according to the first embodiment includes a mapping circuit 11, a control data error correction encoding circuit 13, and an error correction encoding circuit 12.

The error correction encoding device 1 multiplexes one or more low-rate client signals input from the client side to generate a high-rate transmission frame signal. Typically, a low-rate client signal is mapped into a higher-rate fixed-rate frame on the transmission line side. The difference in rate between the client-side signal rate and the transmission fame rate is adjusted by the amount of stuff bits to be inserted into a payload area in the frame. Information indicating the mapped positions of the client signal is put, for example, on control data. For example, the OTN described in Non Patent Literature 1 defines the asynchronous mapping procedure (AMP), which allows asynchronous framing by insertion of data or stuff bits into a specific area prepared in a frame. The receiving end can distinguish the stuff bits or data bits by referring to justification control bytes (JC1, JC2, JC3). The generic mapping procedure (GMP) using a delta-sigma method is also defined. This method also allows stuff bits dispersedly disposed to be controlled by JC bytes. Here, the AMP and the GMP of the OTN have been described as examples. However, this merely indicates that it is common as an asynchronous mapping method to insert stuff bits and describe their control information in overhead for transfer, and does not indicate that the present disclosure is limited to the above mapping procedures.

A transmission frame generated by the error correction encoding device 1 has a configuration illustrated in FIG. 3. In the error correction encoding device 1, the mapping circuit 11 multiplexes a low-rate signal input from the client side and maps the multiplexed signal into a payload area 32 of a transmission frame 3. At that time, the mapping circuit 11 inserts stuff bits into the payload area 32 for adjusting the difference in rate between the transmission rate of the transmission frame 3 generated and the client signal. FIG. 3 illustrates a state in which the stuff bits are dispersedly stored in the payload area 32 of the transmission frame 3. The mapping circuit 11 generates control data 311 indicating the mapped positions and values of the client signal. That is, the mapping circuit 11 multiplexes a client signal input from the outside, and further inserts stuff bits into the multiplexed client signal to adjust the transmission rate, and generates the control data 311 indicating the positions and values of the stuff bits.

The control data error correction encoding circuit 13 that is a first error correction encoding circuit is a circuit provided to protect information included in the control data 311. The control data error correction encoding circuit 13 performs error correction encoding on the control data 311 generated by the mapping circuit 11. The error correction encoding performed on the control data 311 by the control data error correction encoding circuit 13 is first error correction encoding. The control data error correction encoding circuit 13 outputs parity bits generated in the error correction encoding on the control data 311 as control data parity bits 312 to the mapping circuit 11.

The mapping circuit 11 generates a control signal 31 that is a combination of the control data 311 and the control data parity bits 312 and incorporates the control signal 31 into the transmission frame 3.

The error correction encoding circuit 12 that is a second error correction encoding circuit performs second error correction encoding that is different from the first error correction encoding, on the transmission frame 3 into which the control signal 31 has been incorporated by the mapping circuit 11. That is, the error correction encoding circuit 12 performs error correction encoding on the control signal 31 incorporated into the transmission frame 3 and payload data that is data mapped into the payload area 32 of the transmission frame 3, and incorporates generated parity bits as parity bits 33 into the transmission frame 3. As a result, the transmission frame 3 to be actually transmitted is completed.

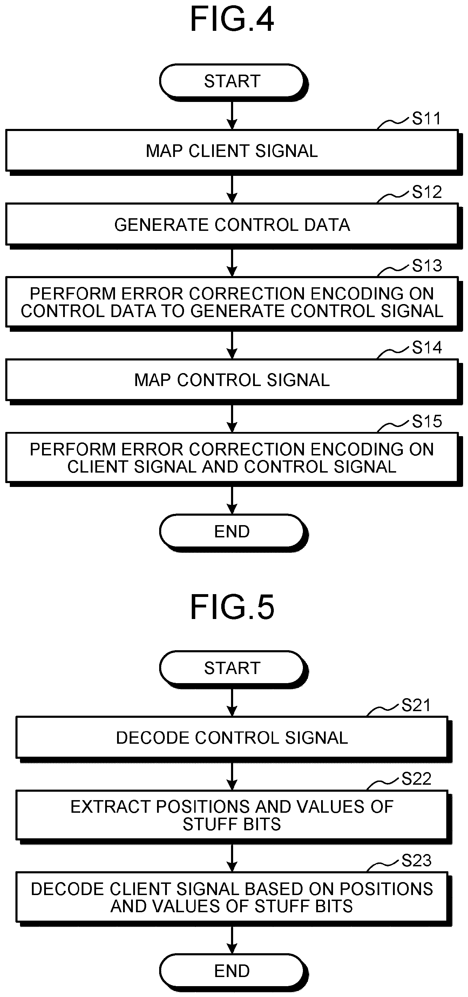

The operation of the error correction encoding device 1 is illustrated in a flowchart as in FIG. 4. FIG. 4 is a flowchart illustrating an example of the operation of the error correction encoding device 1 according to the first embodiment.

In the error correction encoding device 1, first, the mapping circuit 11 maps a client signal input from the client side into the transmission frame 3 (step S11). Specifically, the mapping circuit 11 multiplexes the client signal and inserts stuff bits, and stores the client signal and the stuff bits in the payload area 32 of the transmission frame 3. Next, the mapping circuit 11 generates the control data 311 indicating the positions and values of the stuff bits (step S12). Next, the control data error correction encoding circuit 13 performs error correction encoding on the control data 311 to generate the control signal 31 (step S13). Specifically, the control data error correction encoding circuit 13 performs error correction encoding on the control data 311 to generate the control data parity bits 312, and combines the control data 311 and the control data parity bits 312 to generate the control signal 31. Next, the mapping circuit 11 maps the control signal 31 into the transmission frame 3 (step S14). Next, the error correction encoding circuit 12 performs error correction encoding on the client signal and the control signal 31 (step S15). Specifically, the error correction encoding circuit 12 performs error correction encoding on payload data that is data stored in the payload area 32 and the control signal 31 to generate the parity bits 33, and stores the parity bits 33 in the transmission frame 3.

Next, the error correction decoding device 2 that decodes data at the receiving end of a frame generated by the error correction encoding device 1 will be described.

As illustrated in FIG. 2, the error correction decoding device 2 according to the first embodiment includes a soft-decision circuit 22, an error correction decoding circuit 23, and a frame decoder circuit 24.

An output signal from a frame synchronization circuit 21 that performs frame synchronization on a received signal is input to the error correction decoding device 2. The frame synchronization circuit 21 is a typical circuit that detects frame synchronization, that is, timing in the receiving apparatus, and will not be described.

For a received transmission frame synchronized by the frame synchronization circuit 21, all data of the control signal 31, the data in the payload area 32, and the parity bits 33 are input to the soft-decision circuit 22. Further, only the control signal 31 included in the received transmission frame is duplicated and diverged, and is input to the frame decoder circuit 24.

The frame decoder circuit 24 performs error correction decoding on the input control signal 31 to reproduce the control data 311. The frame decoder circuit 24 extracts the positions and values of the stuff bits in the transmission frame, based on the reproduced control data 311 and the configuration of the transmission frame. The frame decoder circuit 24 outputs the extracted positions and values of the stuff bits to the soft-decision circuit 22 and the error correction decoding circuit 23.

Here, recent optical communications typically use soft-decision error correction decoding as a method that can achieve high error correction performance. In soft-decision error correction decoding, error correction is performed using a value represented by likelihood indicating whether data is likely to be '0' or '1' (e.g., the log likelihood ratio (LLR)) from a received signal. Thus, the soft-decision circuit 22 and the error correction decoding circuit 23 perform decoding processing with the likelihood of the stuff bits at the positions extracted by the frame decoder circuit 24 as a maximum value or a minimum value. For example, in a case where the LLR is used as the likelihood, the soft-decision circuit 22 treats the likelihood when the stuff bits are '1' as a minimum, and the likelihood when the stuff bits are '0' as a maximum. Note that the maximum value or the minimum value of the likelihood of the stuff bits may be treated as a fixed value. As described above, the positions and values of the stuff bits are extracted from the control data obtained by performing error correction decoding on the control signal 31 in the transmission frame, and soft-decision error correction decoding is performed using the extracted positions and values of the stuff bits, so that correction performance higher than that of the usual soft-decision error correction decoding can be achieved.

The operation of the error correction decoding device 2 is illustrated in a flowchart as in FIG. 5. FIG. 5 is a flowchart illustrating an example of the operation of the error correction decoding device 2 according to the first embodiment.

In the error correction decoding device 2, first, the frame decoder circuit 24 decodes the control signal 31 (step S21). Specifically, the frame decoder circuit 24 performs error correction decoding on the control signal 31 input from the frame synchronization circuit 21 to reproduce the control data 311. Next, the frame decoder circuit 24 extracts the positions and values of the stuff bits (step S22). Specifically, the frame decoder circuit 24 extracts the positions and values of the stuff bits in the transmission frame, based on the control data 311 and the configuration of the transmission frame, and outputs the extracted positions and values of the stuff bits to the soft-decision circuit 22 and the error correction decoding circuit 23. Next, the soft-decision circuit 22 and the error correction decoding circuit 23 decode the client signal, based on the positions and values of the stuff bits (step S23). Specifically, the soft-decision circuit 22 calculates the likelihood based on the output signal from the frame synchronization circuit 21, and calculates the likelihood of the stuff bits included in the transmission frame that is the decoding target, based on the positions and values of the stuff bits input from the frame decoder circuit 24. The error correction decoding circuit 23 performs error correction decoding on the transmission frame using the likelihood calculated by the soft-decision circuit 22.

In the first embodiment, a description has been provided on the assumption that the error correction decoding circuit 23 is a soft-decision error correction decoding circuit because soft-decision error correction decoding is typically applied as an error correction decoding method used for long-distance transmission. However, the present disclosure does not limit the error correction decoding method to soft-decision error correction decoding. Even when hard-decision error correction decoding is applied, stuff bits may be fixed to a hard-decision value of '0' or '1' for decoding alike. Furthermore, in addition to stuff bits, data that can be a fixed value because of the frame configuration (e.g., padding bits for frame length adjustment, a pilot signal, an alignment signal, etc.) may be extracted by the frame decoder circuit 24. In the transmission frame 3 according to the present embodiment including the control data 311 that indicates the positions and values of the stuff bits in the payload area 32 in the transmission frame, the control signal 31 may be disposed at the front of the transmission frame 3 so that the frame configuration allows the processing of the frame decoder circuit 24 to be completed before the error correcting code is prepared, to minimize waiting time until decoding processing.

The error correcting code applied to the control data 311 has a short code length because of the configuration of the frame. Thus, correction performance as the error correcting code is expected to be lower than that of the entire transmission frame. On the other hand, recent optical communications often use a multilevel modulation-demodulation scheme for optical signals to be output to the transmission line side. In that case, symbol mapping may be used in which the control signal 31 is assigned to sign bits that are most significant bits (MSBs) in a constellation map in which errors are relatively less likely to occur.

As described above, the error correction encoding device 1 according to the present embodiment multiplexes a client signal and inserts stuff bits to adjust the data transmission rate, and further performs error correction encoding on control data indicating the positions and values of the stuff bits and stores the encoded control data in the transmission frame 3. The error correction encoding device 1 further performs error correction encoding on the result of the error correction encoding of the control data and the multiplexed client signal into which the stuff bits are inserted. This can improve error correction performance when a client signal is multiplexed to achieve a higher transmission rate.

### Second Embodiment.

In the first embodiment described above, in order to process control data in a feedforward manner, an error correcting code is applied to the control data at the transmitting end, and a control signal is decoded in advance at the decoding end. This requires a small error correction encoding circuit and a small error correction decoding circuit in addition to an error correction encoding circuit and an error correction decoding circuit applied to a transmission frame. The following describes an embodiment that uses only an error correction encoding circuit and an error correction decoding circuit applied to a transmission frame.

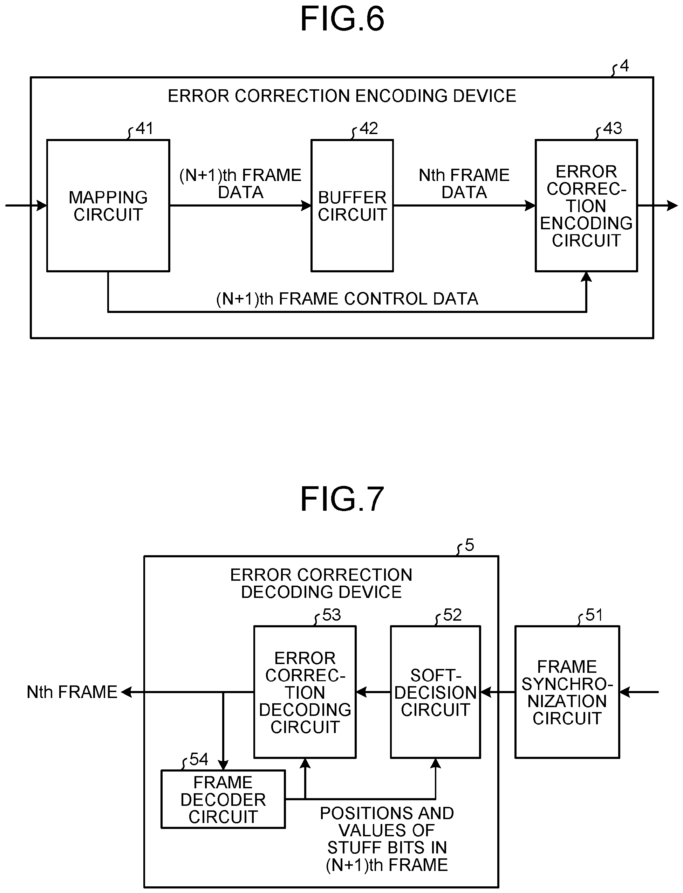

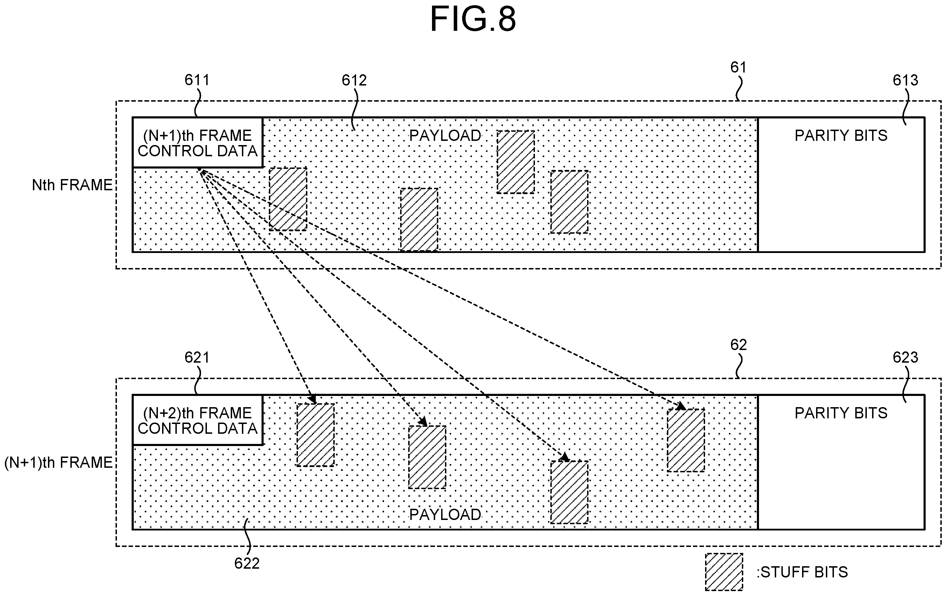

FIG. 6 is a diagram illustrating a configuration example of an error correction encoding device 4 according to a second embodiment. FIG. 7 is a diagram illustrating a configuration example of an error correction decoding device 5 according to the second embodiment. FIG. 8 is a diagram illustrating a configuration example of transmission frames generated by the error correction encoding device 4 according to the second embodiment, and illustrates, as an example, a configuration of a transmission frame 61 to be transmitted Nth and a configuration of a transmission frame 62 to be transmitted (N+1)th. N is a positive integer. In the following description, the transmission frame 61 to be transmitted Nth is referred to as the Nth transmission frame 61, and the transmission frame 62 to be transmitted (N+1)th is referred to as the (N+1)th transmission frame 62.

The operation of the error correction encoding device 4 and the error correction decoding device 5 will be described with reference to the transmission frames 61 and 62 illustrated in FIG. 8.

First, the error correction encoding device 4 will be described. As illustrated in FIG. 6, the error correction encoding device 4 according to the second embodiment includes a mapping circuit 41, a buffer circuit 42 that temporarily holds data, and an error correction encoding circuit 43.

The mapping circuit 41 of the error correction encoding device 4 performs processing similar to that of the mapping circuit 11 of the error correction encoding device 1 according to the first embodiment. That is, the mapping circuit 41 multiplexes one or more low-rate client signals input from the client side to generate a high-rate transmission frame signal. The mapping circuit 41 inserts stuff bits into a payload area in the transmission frame to adjust the difference in rate between the signal rate on client end and the transmission fame rate. Further, the mapping circuit 41 generates control data including information indicating the mapped positions of a client signal.

For example, the mapping circuit 41 maps a client signal and stuff bits for the Nth frame to generate Nth frame data, and generates control data indicating the positions and values of the stuff bits in the Nth frame data (hereinafter, referred to as "Nth frame control data"). The mapping circuit 41 outputs the Nth frame data to the buffer circuit 42, and outputs the Nth frame control data to the error correction encoding circuit 43.

The buffer circuit 42 temporarily holds the Nth frame data input from the mapping circuit 41. Meanwhile, the mapping circuit 41 receives a next (N+1)th client signal, performs mapping and control data generation as in the processing of the Nth client signal, outputs to the generated (N+1)th frame data, and outputs the control data (hereinafter referred to as "(N+1)th frame control data") to the error correction encoding circuit 43. When the (N+1)th frame data is input from the mapping circuit 41, the buffer circuit 42 outputs the held Nth frame data to the error correction encoding circuit 43. At this time, since the mapping circuit 41 outputs the (N+1)th frame control data to the error correction encoding circuit 43 as described above, the Nth frame data and the (N+1)th frame control data are input to the error correction encoding circuit 43 as illustrated in FIG. 6.

The error correction encoding circuit 43 that generates the transmission frames illustrated in FIG. 8 performs error correction encoding on the frame data (the Nth frame data 612) input from the buffer circuit 42 and the control data (the (N+1)th frame control data 611) to generate parity bits 613, and combines the Nth frame data 612 and the (N+1)th frame control data 611 with the generated parity bits 613 to generate the Nth transmission frame 61.

As indicated by dashed arrows in FIG. 8, the (N+1)th frame control data 611 included in the Nth transmission frame 61 indicates the positions and values of the stuff bits included in the next (N+1)th transmission frame 62.

Likewise, the error correction encoding circuit 43 performs error correction encoding on (N+1)th frame data 622 and (N+2)th frame control data 621 to generate parity bits 623, and combines these to generate the (N+1)th transmission frame 62.

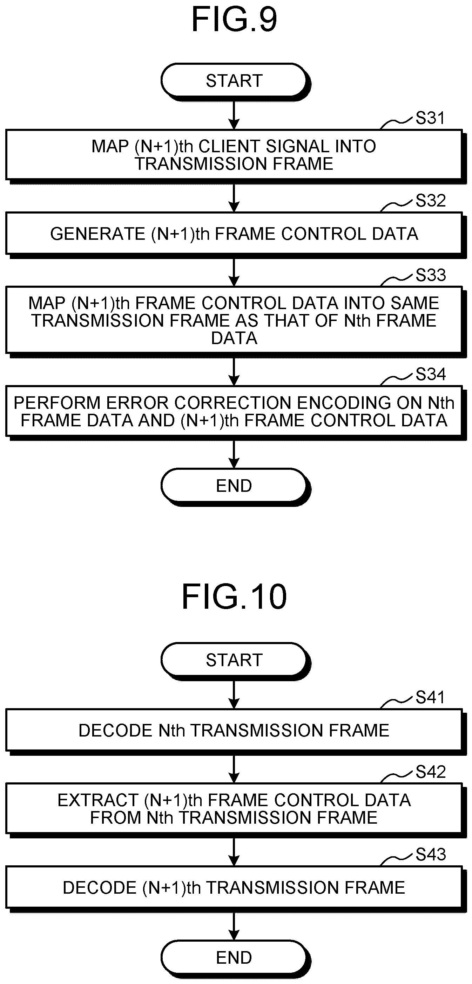

The operation of the error correction encoding device 4 is illustrated in a flowchart as in FIG. 9. FIG. 9 is a flowchart illustrating an example of the operation of the error correction encoding device 4 according to the second embodiment. A description will be given on the assumption that the generation of Nth frame data and Nth frame control data has been completed.

In the error correction encoding device 4, first, the mapping circuit 41 maps an (N+1)th client signal that is input from the client end into a transmission frame (step S31). Specifically, the mapping circuit 41 multiplexes the (N+1)th client signal and inserts stuff bits, and stores the multiplexed client signal and the stuff bits as the (N+1)th frame data 622 in the transmission frame 62. Next, the mapping circuit 41 generates the (N+1)th frame control data 611 (step S32). Specifically, the mapping circuit 41 generates the (N+1)th frame control data 611 indicating the positions and values of the stuff bits in the (N+1)th transmission frame 62. Next, the mapping circuit 41 maps the (N+1)th frame control data 611 into the same transmission frame as that of the Nth frame data 612 (the Nth transmission frame 61) (step S33). Next, the error correction encoding circuit 43 performs error correction encoding on the Nth frame data 612 and the (N+1)th frame control data 611 (step S34). That is, the error correction encoding circuit 43 performs error correction encoding on the Nth frame data 612 and the (N+1)th frame control data 621 to generate the Nth transmission frame 61.

Next, the error correction decoding device 5 that decodes data at the frame receiving end will be described. The present embodiment provides a description, focusing on the (N+1)th transmission frame 62.

As illustrated in FIG. 7, the error correction decoding device 5 according to the second embodiment includes a soft-decision circuit 52, an error correction decoding circuit 53, and a frame decoder circuit 54. A frame synchronization circuit 51 in the preceding stage of the error correction decoding device 5 is a circuit similar to the frame synchronization circuit 21 in the preceding stage of the error correction decoding device 2 according to the first embodiment. The soft-decision circuit 52 and the error correction decoding circuit 53 of the error correction decoding device 5 are circuits similar to the soft-decision circuit 22 and the error correction decoding circuit 23 included in the error correction decoding device 2 according to the first embodiment.

In the error correction decoding device 5, while the (N+1)th transmission frame 62 is received and being synchronized in the frame synchronization circuit 51, the soft-decision circuit 52 and the error correction decoding circuit 53 perform error correction decoding processing on the Nth transmission frame 61. The decoded Nth transmission frame 61 includes the (N+1)th frame control data 611. The frame decoder circuit 54 of the error correction decoding device 5 extracts the positions and values of the stuff bits in the (N+1)th transmission frame 62, using the (N+1)th frame control data 611 output from the error correction decoding circuit 53. The frame decoder circuit 54 outputs the extracted positions and values of the stuff bits in the (N+1)th transmission frame 62 to the error correction decoding circuit 53 and the soft-decision circuit 52.

The soft-decision circuit 52 and the error correction decoding circuit 53 perform decoding processing with the likelihood of the stuff bits extracted by the frame decoder circuit 54 as a maximum value or a minimum value. The maximum value or the minimum value may be treated as a fixed value. The soft-decision circuit 52 and the error correction decoding circuit 53 perform error correction decoding on the (N+1)th transmission frame 62, using the (N+1)th frame control data included in the result of the error correction decoding processing on the Nth transmission frame 61. Thus, the error correction decoding device 5 extracts the positions and values of stuff bits in a second transmission frame from control data of the second transmission frame obtained by decoding a first transmission frame, and performs error correction decoding on the second transmission frame input next, using the positions and values of the stuff bits. Consequently, as in the first embodiment, correction performance higher than that of the general soft-decision error correction decoding can be achieved. Further, the performance of correction of control data and payload data can be improved without performing separate error correction encoding and decoding on the control data. Although the (N+1)th transmission frame 62 has been described, other transmission frames are decoded in the same way.

The operation of the error correction decoding device 5 is illustrated in a flowchart as in FIG. 10. FIG. 10 is a flowchart illustrating an example of the operation of the error correction decoding device 5 according to the second embodiment.

In the error correction decoding device 5, first, the soft-decision circuit 52 and the error correction decoding circuit 53 decode the Nth transmission frame 61 input from the frame synchronization circuit 51 (step S41). Next, the frame decoder circuit 54 extracts the (N+1)th frame control data from the decoded Nth transmission frame 61 (step S42). After that, when the (N+1)th transmission frame 62 is input from the frame synchronization circuit 51, the soft-decision circuit 52 and the error correction decoding circuit 53 decode the (N+1)th transmission frame 62, based on the (N+1)th frame control data extracted by the frame decoder circuit 54 in step S42 (step S43). Specifically, the soft-decision circuit 52 calculates the likelihood of the stuff bits included in the (N+1)th transmission frame 62, based on, of the information included in the (N+1)th frame control data extracted in step S42, the positions and values of the stuff bits in the (N+1)th transmission frame 62, and the error correction decoding circuit 53 performs error correction decoding on the (N+1)th transmission frame 62, using the likelihood.

In the second embodiment, a description has been provided on the assumption that a soft decision decoding circuit is used because soft-decision error correction decoding is typically applied as an error correction decoding method used for long-distance transmission. However, as in the first embodiment, the error correction decoding method is not limited to soft-decision error correction decoding. Even with hard-decision error correction decoding, it is possible that each stuff bit is fixed to a hard-decision value of '0' or '1' for decoding alike. Furthermore, in addition to stuff bits, data that can be a fixed value because of the frame configuration (e.g., padding bits for frame length adjustment, a pilot signal, an alignment signal, etc.) may be extracted by the frame decoder circuit 54. The position of control data indicating the positions and values of stuff bits in a payload area in a transmission frame is the head of a transmission frame in the example illustrated in FIG. 8, but a specific location is not defined.

As described above, the error correction encoding device 4 according to the present embodiment multiplexes a client signal and inserts stuff bits to generate Nth frame data, and generates Nth frame control data indicating the positions and values of the stuff bits. When the error correction encoding device 4 that has held the Nth frame data generates (N+1)th frame data and (N+1)th frame control data, the error correction encoding device 4 performs error correction encoding on data that is a combination of the held Nth frame data and the (N+1)th frame control data. This can improve error correction performance when a client signal is multiplexed to achieve a higher transmission rate. Furthermore, this eliminates the need to separately provide circuits for performing error correction encoding and decoding on control data, and can reduce the circuit scale and simplify the processing.

Next, hardware for implementing the error correction encoding device and the error correction decoding device according to the present disclosure will be described. The error correction encoding device and the error correction decoding device can be implemented by the same pieces of hardware. Therefore, the hardware for implementing the error correction encoding device will be described, and the hardware for implementing the error correction decoding device will not be described. As an example, hardware for implementing the error correction encoding device 1 according to the first embodiment will be described.

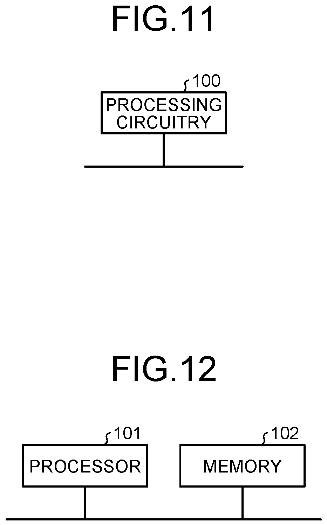

The mapping circuit 11, the error correction encoding circuit 12, and the control data error correction encoding circuit 13 of the error correction encoding device 1 can be implemented by processing circuitry that is dedicated hardware. FIG. 11 is a diagram illustrating an example of hardware for implementing the error correction encoding device 1. The mapping circuit 11, the error correction encoding circuit 12, and the control data error correction encoding circuit 13 of the error correction encoding device 1 are implemented, for example, by processing circuitry 100 illustrated in FIG. 11.

The processing circuitry 100 corresponds, for example, to a single circuit, a combined circuit, a programmed processor, a parallel-programmed processor, an application-specific integrated circuit (ASIC), a field-programmable gate array (FPGA), or a combination of them. The mapping circuit 11, the error correction encoding circuit 12, and the control data error correction encoding circuit 13 of the error correction encoding device 1 may be implemented by different processing circuits 100, or all or some of them may be collectively implemented by one or a plurality of processing circuits.

Alternatively, the mapping circuit 11, the error correction encoding circuit 12, and the control data error correction encoding circuit 13 of the error correction encoding device 1 may be implemented by a processor 101 and a memory 102 illustrated in FIG. 12. FIG. 12 is a diagram illustrating another example of the hardware for implementing the error correction encoding device 1.

The processor 101 is a central processing unit (CPU, also called a central processor, a processing device, an arithmetic device, a microprocessor, a microcomputer, or a digital signal processor (DSP)), a system large-scale integration (LSI), or the like. The memory 102 is random-access memory (RAM), read-only memory (ROM), an erasable programmable read-only memory (EPROM), an electrically erasable programmable read-only memory (EEPROM) (registered trademark), or the like.

When the mapping circuit 11, the error correction encoding circuit 12, and the control data error correction encoding circuit 13 of the error correction encoding device 1 are implemented by the processor 101 and the memory 102, a program for operating as the mapping circuit 11, the error correction encoding circuit 12, and the control data error correction encoding circuit 13 is stored in the memory 102, and the processor 101 reads and executes the program, thereby implementing the mapping circuit 11, the error correction encoding circuit 12, and the control data error correction encoding circuit 13 of the error correction encoding device 1.

The program for operating as the mapping circuit 11, the error correction encoding circuit 12, and the control data error correction encoding circuit 13, stored in the memory 102 may be provided to a user or the like in a state of being written on a storage medium such as a compact disc (CD)-ROM or a digital versatile disc (DVD)-ROM, or may be provided via a network, for example.

Part of the mapping circuit 11, the error correction encoding circuit 12, and the control data error correction encoding circuit 13 of the error correction encoding device 1 may be implemented by the processing circuitry 100 illustrated in FIG. 11, and the rest may be implemented by the processor 101 and the memory 102 illustrated in FIG. 12.

The configurations described in the above embodiments illustrate an example, and can be combined with another known art. The embodiments can be combined with each other. The configurations can be partly omitted or changed without departing from the gist.

### Reference Signs List

1, 4 error correction encoding device; 2, 5 error correction decoding device; 3, 61, 62 transmission frame; 11, 41 mapping circuit; 12, 43 error correction encoding circuit; 13 control data error correction encoding circuit; 21, 51 frame synchronization circuit; 22, 52 soft-decision circuit; 23, 53 error correction decoding circuit; 24, 54 frame decoder circuit; 31 control signal; 32 payload area; 33, 613, 623 parity bit; 42 buffer circuit; 311 control data; 312 control data parity bit; 611, 621 frame control data; 612, 622 frame data.

## Claims

1. An error correction encoding device comprising:
a mapping circuit to multiplex a client signal and map the multiplexed client signal into a transmission frame, and map stuff bits for adjusting a data transmission rate into the transmission frame;
a first error correction encoding circuit to perform first error correction encoding on control data included in the transmission frame and indicating positions and values of the stuff bits; and
a second error correction encoding circuit to perform second error correction encoding on the transmission frame including the control data on which the first error correction encoding is performed by the first error correction encoding circuit.

2. The error correction encoding device according to claim 1, wherein
the mapping circuit maps the control data on which the first error correction encoding is performed into a front of the transmission frame.

3. The error correction encoding device according to claim 1 or 2, wherein
the mapping circuit assigns the control data on which the first error correction encoding is performed to symbol sign bits.

4. An error correction decoding device to decode the transmission frame generated by the error correction encoding device according to any one of claims 1 to 3, the error correction decoding device comprising
a frame decoder circuit to perform error correction decoding on the control data included in the transmission frame on which the first error correction encoding is performed, and extract the positions and values of the stuff bits included in the transmission frame that is a decoding target, wherein
the error correction decoding device performs error correction decoding on the transmission frame that is the decoding target, based on the positions and values of the stuff bits extracted by the frame decoder circuit.

5. The error correction decoding device according to claim 4, comprising:
a soft-decision circuit to calculate likelihood of bits included in the transmission frame that is the decoding target, based on the positions and values of the stuff bits extracted by the frame decoder circuit; and
an error correction decoding circuit to perform error correction decoding on the transmission frame that is the decoding target, using the likelihood calculated by the soft-decision circuit.

6. The error correction decoding device according to claim 5, wherein
the soft-decision circuit calculates the likelihood such that the likelihood of the stuff bits is a maximum value or a minimum value of the likelihood of each of the bits that are included in the transmission frame that is the decoding target.

7. The error correction decoding device according to claim 5 or 6, wherein
a maximum value or a minimum value of the likelihood of the stuff bits is a fixed value.

8. The error correction decoding device according to claim 4, comprising
an error correction decoding circuit to perform error correction decoding on the transmission frame that is the decoding target, with a hard-decision value of the stuff bits included in the transmission frame that is the decoding target as a fixed value.

9. An error correction encoding device comprising:
a mapping circuit to multiplex a client signal and map the multiplexed client signal into a transmission frame and map stuff bits for adjusting a data transmission rate into the transmission frame to generate frame data, and further generate control data indicating positions and values of the stuff bits;
a buffer circuit to, when the frame data is generated by the mapping circuit, receive and hold the generated frame data and output frame data that is held before the generated frame data is held; and
an error correction encoding circuit to, when the control data is generated by the mapping circuit, perform error correction encoding on a transmission frame that is a combination of the generated control data and the frame data output from the buffer circuit.

10. An error correction decoding device to decode the transmission frame generated by the error correction encoding device according to claim 9,
the error correction decoding device using the control data included in the decoded transmission frame obtained by performing error correction decoding on the transmission frame, in error correction decoding of a next transmission frame.

11. An error correction encoding method performed by an error correction encoding device, the error correction encoding method comprising:
a mapping step of multiplexing a client signal and mapping the multiplexed client signal into a transmission frame, and mapping stuff bits for adjusting a data transmission rate into the transmission frame;
a first encoding step of performing first error correction encoding on control data included in the transmission frame and indicating positions and values of the stuff bits; and
a second encoding step of performing second error correction encoding on the transmission frame including the control data on which the first error correction encoding is performed in the first encoding step.

12. An error correction decoding method performed by an error correction decoding device on the transmission frame generated by performing the error correction encoding method according to claim 11, the error correction decoding method comprising:
a control data decoding step of performing error correction decoding on the control data included in the transmission frame on which the first error correction encoding is performed, and extracting the positions and values of the stuff bits included in the transmission frame that is a decoding target; and
a transmission frame decoding step of performing error correction decoding on the transmission frame that is the decoding target, based on the positions and values of the stuff bits extracted in the control data decoding step.

13. A control circuit to control an error correction encoding device, the control circuit causing the error correction encoding device to perform:
a mapping step of multiplexing a client signal and mapping the multiplexed client signal into a transmission frame, and mapping stuff bits for adjusting a data transmission rate into the transmission frame;
a first encoding step of performing first error correction encoding on control data included in the transmission frame and indicating positions and values of the stuff bits; and
a second encoding step of performing second error correction encoding on the transmission frame including the control data on which the first error correction encoding is performed in the first encoding step.

14. A control circuit to control an error correction decoding device to decode the transmission frame generated by the control circuit according to claim 13 controlling the error correction encoding device, the control circuit causing the error correction decoding device to perform:
a control data decoding step of performing error correction decoding on the control data included in the transmission frame on which the first error correction encoding is performed, and extracting the positions and values of the stuff bits included in the transmission frame that is a decoding target; and
a transmission frame decoding step of performing error correction decoding on the transmission frame that is the decoding target, based on the positions and values of the stuff bits extracted in the control data decoding step.

15. A storage medium storing an encoding program to control an error correction encoding device,
the encoding program causing the error correction encoding device to perform:
a mapping step of multiplexing a client signal and mapping the multiplexed client signal into a transmission frame, and mapping stuff bits for adjusting a data transmission rate into the transmission frame;
a first encoding step of performing first error correction encoding on control data included in the transmission frame and indicating positions and values of the stuff bits; and
a second encoding step of performing second error correction encoding on the transmission frame including the control data on which the first error correction encoding is performed in the first encoding step.

16. A storage medium storing a decoding program to control an error correction decoding device to decode the transmission frame generated by the encoding program stored in the storage medium according to claim 15 controlling the error correction encoding device,
the decoding program causing the error correction decoding device to perform:
a control data decoding step of performing error correction decoding on the control data included in the transmission frame on which the first error correction encoding is performed, and extracting the positions and values of the stuff bits included in the transmission frame that is a decoding target; and
a transmission frame decoding step of performing error correction decoding on the transmission frame that is the decoding target, based on the positions and values of the stuff bits extracted in the control data decoding step.
